Europäisches Patentamt

European Patent Office

Office européen des brevets

(11) Publication number: **0 439 645 A1**

## EUROPEAN PATENT APPLICATION

(21) Application number: 90101757.4

(22) Date of filing: 30.01.90

(51) Int. Cl.⁵: **F23G 5/02**, F23G 7/00, B09B 3/00

(43) Date of publication of application:
07.08.91 Bulletin 91/32

(84) Designated Contracting States:
DE ES FR GB IT

(71) Applicant: **OFFICINE METALMECCANICHE NOVA S.P.A.**
**Via Assunta 61**
**I-20054 Nova Milanese, Milan(IT)**

(72) Inventor: **Torlasco, Bruno**
**Via Ariosto 26**
**I-20145 Milan(IT)**

(74) Representative: **Giambrocono, Alfonso, Dr. Ing. et al**
**Ing. A. Giambrocono & C. S.r.l. Via Rosolino Pilo 19/B**
**I-20129 Milano(IT)**

(54) Method for the controlled feeding of thermal destruction plants for urban and/or special refuse, and the plant for implementing the method.

(57) The method according to the invention consists essentially of sorting the whole of the collected refuse into a plurality of groups, namely a) hospital and the like, b) scoopable sludge and the like, c) pumpable sludge and the like, and d) residues from the treatment of urban refuse; withdrawing variable quantities of refuse from each group so as to obtain a formulation which is as uniform as possible in terms of calorific value; and feeding this formulation to the furnace to incinerate the constituent refuse of said formulation.

The plant for implementing the aforesaid method consists essentially of an environment (1) divided into a plurality of spaces, each housing a group of refuse; an incinerator furnace (2) with associated operating members, of conventional type; and mechanical means for withdrawing the desired refuse quantities from each space and for discharging said quantities into the feed hopper (3) of said incinerator furnace.

# METHOD FOR THE CONTROLLED FEEDING OF THERMAL DESTRUCTION PLANTS FOR URBAN AND/OR SPECIAL REFUSE, AND THE PLANT FOR IMPLEMENTING THE METHOD.

This industrial invention patent relates to a method for the controlled feeding of thermal destruction plants for special and/or urban refuse, and a plant for implementing the method. Urban and/or special refuse, as is well known, is currently used as fuel in suitable furnaces for both its incineration and the production of steam to be used in situ for technical purposes or for operating a turbine coupled to an electrical generator. In all cases it is extremely important for the furnace operation that the calorific value of the refuse loads, which varies according to the refuse composition, remains as constant as possible with time. This calorific value varies both according to the season and with the passing of time, being influenced by the standard of living of the population and by the collection systems in the case of urban refuse, whereas in the case of industrial refuse the calorific value is fairly constant, being influenced only by the type of product treated in the industrial locations served by the incinerator.

Broadly, and purely as an illustration to better understand the present inventive concept, the refuse to which reference is made can be divided into the following categories:
- biological sludge originating from industrial water treatment;
- sludge originating from paper manufacture;
- spent mycelia;
- non-chlorinated sludge and pitch;
- sludge from backwashing;
- sludge and bottoms from tankers;
- sludge containing non-halogenated solvents;
- sludge from paint and colouring material;
- various resins;
- organic sludges of other type;
- contaminant fabrics, filters, sawdust;
- ink residues, resin residues;
- spent active carbon;
- laboratory chemical residues and pollutant solvents;
- contaminated packing and containers;
- hospital refuse;
- pharmaceutical refuse;
- dangerous urban refuse (containers labelled T and F);
- residues from the treatment of urban refuse;

each category having its own lower calorific value (LCV) and its own chemical composition.

In consideration of this short summary, which can be widely developed by the expert of the art, an object of the present invention is to provide a method and plant which allow maximum utilization of the incinerator furnace with minimum environmental pollution.

A further object of the invention is to implement the method by means of a completely automatic plant, so avoiding any contact with contaminated and/or contaminant material by the operating personnel.

These and further objects will be apparent to the expert of the art from the following description and claims.

The method for incinerating urban and industrial refuse according to the invention is essentially characterised by storing the whole of the collected refuse in a manner sorted into a plurality of groups, namely a) hospital and the like, b) scoopable sludge and the like, c) pumpable sludge and the like, and a plurality of homogeneous sub-groups based on their chemical/physical characteristics; withdrawing variable quantities of refuse from each group to obtain a formulation which is as uniform as possible in terms of calorific value; and feeding this formulation to the furnace to incinerate its constituent refuse.

In constructing the formulation, due count will obviously be taken of the level of pollutants in the constituent refuse of each group, so as to prevent the discharge of effluents which do not satisfy environmental regulations.

The plant for implementing the aforesaid method is characterised essentially by consisting of an environment divided into a plurality of spaces, each for housing a group of refuse; an incinerator furnace with associated operating members, of conventional type; and mechanical means for withdrawing the desired refuse quantities from each space and for discharging said quantities into the feed hopper of said incinerator furnace. As can be seen from the single accompanying schematic drawing, given by way of non-limiting example, the reference numeral 1 indicates overall an environment, such as a shed, divided into several spaces, namely:
- space S1, for storing hospital refuse;
- space S2, for storing refuse similar to hospital refuse;
- space LAV, for conveying the containers to the thermal destruction unit and for preparing them for reuse;
- space S3 for parking the empty containers prepared for reuse;
- space S4 for depositing scoopable sludge;
- space S5 for depositing refuse in drums;
- space S6 for depositing pumpable sludge and the like.

The reference numeral 2 indicates essentially a conventional incinerator furnace comprising a hopper 3 for feeding a rotary furnace 4, a post-combustion chamber 5 and other operating members, which as stated are all conventional and do not form part of the present invention.

The various spaces S1..... S6 of the environment 1 are connected to the furnace feed hopper 3 by suitable mechanical means for transferring the various types of refuse, such as an overhead travelling crane for solid refuse, and pipes and pumps for the liquid and/or pumpable refuse.

The mechanical withdrawal and transfer means are controlled by a processor suitably programmed on the basis of the LCV of each category and of other parameters which may be considered necessary, such as the the content of substances able to produce harmful effluents.

The method and plant as heretofore described allows the incinerator furnace efficiency to be maximized and enables the level of harmful effluents to be kept within regulations.

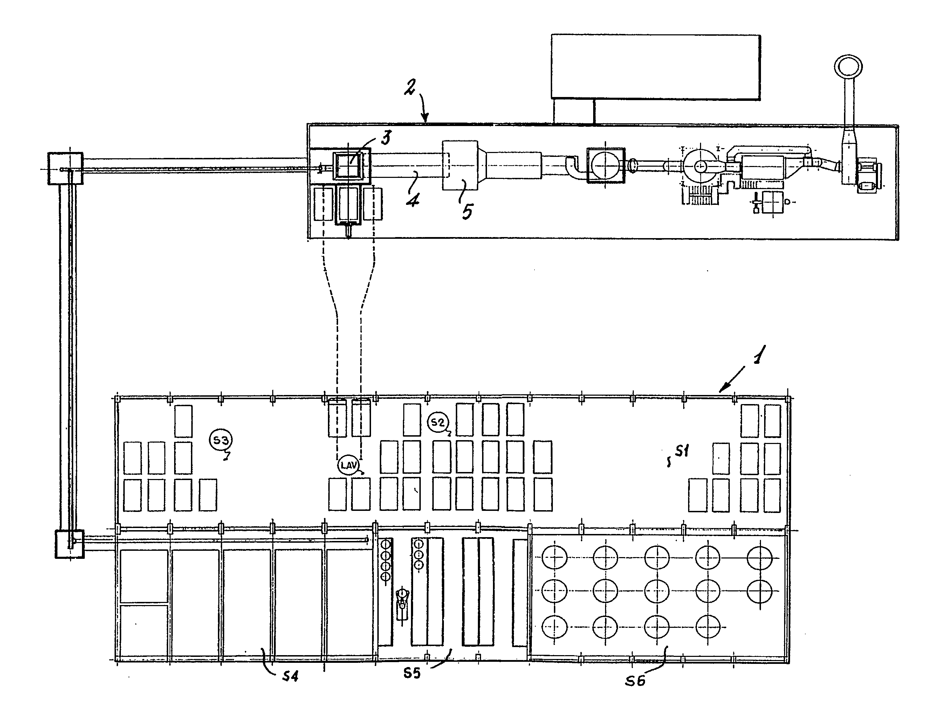

**Claims**

1. A method for the controlled feeding of thermal destruction plants for urban and/or special refuse, characterised by comprising the following stages:
   - sorting the whole of the collected refuse into a plurality of groups, namely a) hospital and the like, b) scoopable sludge and the like, c) pumpable sludge and the like, d) residues from the treatment of urban refuse, e) other refuse;
   - withdrawing variable quantities of refuse from each group so as to obtain a formulation which is as uniform as possible in terms of calorific value; and
   - feeding this formulation to the incinerator furnace to incinerate the constituent refuse of said formulation.

2. A method as claimed in claim 1, characterised in that in constructing the formulation, due count is taken of the pollutant characteristics of the constituent refuse of each group, so as to prevent the discharge of highly pollutant gases and/or fumes.

3. A plant for implementing the method claimed in the preceding claims, characterised by consisting of an environment divided into a plurality of spaces, each for housing a group of refuse; an incinerator furnace with associated operating members, of conventional type; and mechanical means for withdrawing the desired refuse quantities from each space and for discharging said quantities into the feed hopper of said incinerator furnace.

4. A plant as claimed in claim 3, characterised in that said mechanical withdrawal and transfer means are controlled by a processor suitably programmed on the basis of the LCV of each group or sub-group of refuse and of other necessary parameters, with particular reference to the content of pollutant and harmful agents.

All substantially as described, illustrated, claimed and for the objects specified.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | US-A-4133273 (GLENNON) <br> * column 3, line 58 - column 4, line 5 * <br> * column 4, lines 62 - 66 * | 1, 2 | F23G5/02 <br> F23G7/00 <br> B09B3/00 |
| Y | * column 8, line 62 - column 9, line 30 * <br> * column 13, lines 12 - 33; figure * | 3 | |
| | --- | | |
| Y | HYDROCARBON PROCESSING. <br> April 1979, HOUSTON US <br> pages 183 - 192; H.W. Fabian et al: <br> "How Bayer incinerates waste" <br> * page 187, left-hand column, lines 25 - 44 * <br> * page 188, left-hand column, paragraph 1 - page 188, right-hand column, paragraph 1 * | 3 | |
| | --- | | |
| A | INGENIEURSBLAD. <br> vol. 42, no. 5, 1 March 1973, ANTWERPEN BE <br> pages 129 - 132; J. Coeklebergh: <br> "De verbranding als verwerkingsmetode van vaste industriële afvalstoffen" <br> * page 130, left-hand column, paragraphs 1 - 2 * | 2 | |
| | --- | | TECHNICAL FIELDS SEARCHED (Int. Cl.5) |
| A | DE-A-2845763 (GOEPFERT) | | |
| | ----- | | F23G <br> B09B <br> F01K <br> F22B |

The present search report has been drawn up for all claims

| Place of search | Date of completion of the search | Examiner |
|---|---|---|
| THE HAGUE | 21 SEPTEMBER 1990 | SHALLOE D.M. |